# EUROPÄISCHE PATENTSCHRIFT

(11) **EP 1 078 571 B1**
(45) Veröffentlichungstag und Bekanntmachung des Hinweises auf die Patenterteilung: **07.05.2003**
(21) Anmeldenummer: 00115417.8
(22) Anmeldetag: 17.07.2000
(51) Int. Cl.: A01K 5/02, A01K 1/10, A01K 5/00, A01K 5/01

(54) **Fütterungsautomat zum Füttern von Zuchttieren, insbesondere von Schweinen**
Automatic feeding device for animals, in particular hogs
Appareillage automatique pour alimer des animaux, en particulier des porcs

(30) Priorität: 25.08.1999 DE 19940226
(43) Veröffentlichungstag der Anmeldung: 28.02.2001
(73) Patentinhaber: Durotec Stallbauelemente GmbH, 24755 Rendsburg (DE)
(72) Erfinder: Hinrichs, Thorsten, 25795 Weddingstedt (DE)
(74) Vertreter: Bohnenberger, Johannes, Dr.

(56) Entgegenhaltungen:
- BE-A- 506 416
- GB-A- 737 101
- US-A- 1 341 887
- US-A- 2 505 396

## Beschreibung

Die Erfindung betrifft einen Fütterungsautomat zum Füttern von Zuchttieren, insbesondere von Schweinen nach dem Anspruch 1.

Es sind bereits verschiedene Konstruktionen von Fütterungsautomaten bekannt. Die bekannten Fütterungsautomaten sind beispielsweise "Einzel-Fütterungsautomaten", bei denen ein Freßplatz (Abgabe von Trockenfutter) von bis zu vier Tieren benutzt werden darf. Die Futterabgabe erfolgt hierbei durch Betätigen einer Klappe/eines Hebels durch ein einzelnes Tier, das gerade an dieser Stelle frißt. Das Futter wird auch den Tieren zugeführt, die daneben fressen. Es kann darum auch dazu kommen, daß Futter in solche Bereiche gelangt, in denen nichts weggefressen wird.

Darüber hinaus sind Brei-Futterautomaten in Rundbauweise bekannt, an denen bis zu dreissig Tiere fressen können.

Auch sind gesteuerte Futterautomaten bekannt, die eine langsam steigende Futterabgabemenge ermöglichen, bei denen eine langgestreckte Transportschnecke Futter in einem rohrförmigen Zwischenbehälter füllt. Sobald dieser voll ist, bleibt die Schnecke stehen. Zu gegebener Zeit (entsprechend einer Zeitsteuerung) wird das Zwischenlager dann ausgeleert, so daß über die gesamte Strecke eine bestimmte Futtermenge zur Verfügung steht. Diese bekannte Anlage ist großbauend und kann in keinem Fall von Tieren betätigt werden, die beispielsweise so viel fressen dürfen, wie sie wollen.

Die der Erfindung zugrundeliegende Aufgabe besteht darin, einen Fütterungsautomaten zum Füttern von Zuchttieren, insbesondere von Schweinen zu schaffen, der bei einfacher Konstruktion die Möglichkeit bietet, daß jedes Zuchttier ohne besonders großen Kraftaufwand eine Rotoranordnung betätigen kann, durch die Futter in einen Futtertrog bei einer jeweiligen Betätigung in begrenzter Menge zugeführt wird, und wobei insbesondere bei der Futterverteilung in dem jeweiligen Futtertrog keine toten ungenutzten Bereiche auftreten können.

Diese Aufgabe wird erfindungsgemäß durch die im Anspruch 1 aufgeführten Merkmale gelöst.

Erfindungsgemäß umfaßt der Fütterungsautomat zum Füttern von Zuchttieren, insbesondere von Schweinen einen vorzugsweise kreisrund ausgebildeten Futtertrog, in den in vertikaler Richtung über wenigstens einen Futterzuführschacht eine Futtermasse zuführbar ist. Der Fütterungsautomat ist ferner an seinem unteren Endbereich mit einem über dem Futtertrog angeordneten Futterabgaberotor ausgestattet, der mehrere Rotorflügel aufweist, die mit Schabelementen ausgestattet sind, wobei die Rotorflügel unabhängig voneinander um eine zentrale Rotorachse über einen begrenzten Winkelbereich durch ein jeweiliges Zuchttier schwenkbar sind, um bei jeder Schwenkbewegung vom unteren Endbereich der Futtermasse kleinere in den Futtertrog gelangende Mengen abzuschaben. Dadurch daß jeder der Rotorflügel unabhängig von den anderen Rotorflügeln betätigbar ist, ist der gesamte mechanische Widerstand, den ein Zuchttier überwinden muß, um den Rotorflügel zu bewegen, vergleichsweise gering.

Im einzelnen kann die Erfindung dadurch eine vorteilhafte Ausgestaltung erfahren, daß die Rotorflügel an der Rotorachse drehbar gelagert sind und durch Anschlagelemente in ihrer jeweiligen Schwenkbewegung begrenzt sind.

Durch diese letztere Ausgestaltung der Erfindung wird grundsätzlich die Möglichkeit geschaffen, an dem Fütterungsautomaten mehrere fest vorgegebene Freßbereiche einzurichten, in die bei Betätigung des jeweiligen zugeordneten Rotorflügels Futter abgegeben wird.

Um dabei zu verhindern, daß aufgrund der begrenzten Schwenkbewegung des jeweiligen Rotorflügels tote Zonen entstehen, in die kein Futter gelangen kann, sind die genannten Anschlagelemente auf einer gemeinsamen, vorzugsweise ebenfalls um die Rotorachse drehbar gelagerten Platte angeordnet. Diese Platte kann daher beispielsweise in regelmäßigen Zeitabständen in eine andere Position verdreht werden oder es kann die Platte mit einem eigenen von einem Zuchttier betätigbaren Rotorflügel ausgestattet sein, so daß bei Betätigung des Rotorflügels, welcher der genannten Platte zugeordnet ist, die Anschlagelemente mitbewegt werden und dadurch andere Positionen einnehmen.

In vorteilhafter Weise kann jeder Rotorflügel ein eigenes Schabelemente und ein radial außerhalb des Schabelementes angeordnetes Futterverteilungselement aufweisen.

Das Schabelement ist dabei in einer derartigen radialen Position angeordnet, daß es exakt unterhalb des unteren Endes eines von oben zugeführten Futterstranges bewegbar ist, von dessen unterem Endbereich bei einer Schwenkbewegung eines Rotorflügels somit Futter abgeschabt werden kann.

Das jeweilige Futterverteilerelement liegt jedoch zweckmäßiger Weise im Außenbereich des Troges und hat die Aufgabe, das mit Hilfe eines jeweiligen Schabelementes abgeschabte Futter in dem Trogbereich zu verteilen.

Bei einer vorteilhaften Ausführungsform des erfindungsgemäßen Fütterungsautomaten ist ein allen Rotorflügeln zugeordneter gemeinsamer Futterzuführschacht vorgesehen, der in bevorzugter Weise in seiner Höhe verstellbar ist. Dadurch kann die pro Schabbewegung von dem unteren Ende des Futterstranges abgeschabte Futtermenge in gewissen Grenzen eingestellt werden.

Diese letztere Ausführungsform eignet sich besonders für eine hochkompakte relativ feste Futtermasse bzw. Futtermassestrang, insbesondere für klebriges Futter wie z.B. einem Corn-copp-Mix. Es besteht bei dieser Ausführungsform nicht die Gefahr, daß Abschnitte des zugeführten Futtermassestranges unterhöhlt oder ausgehöhlt werden und daher einige der Rotorflügel keine Schabwirkung mehr ausüben können.

Gemäß einer weiteren Ausführungsform der vorliegenden Erfindung kann der Fütterungsautomat derart ausgestaltet werden, daß die Rotorflügel in bezug auf die Rotorachse in radialer Richtung um eine begrenzte Strecke verschiebbar gelagert sind. Diese Ausführungsform hat den Vorteil, daß der Schabbereich nicht nur auf einen bestimmten radialen Bereich beschränkt wird, sondern auch in radialer Richtung verändert werden kann, so daß an verschiedenen Bereichen eines Futtermassestranges an seinem unteren Ende Teile abgeschabt werden können.

Eine Ausführungsform, um die radiale Verschiebbarkeit der Rotorflügel in bezug auf die Rotorachse zu ermöglichen, besteht darin, daß die Rotorflügel an ihrem radial innenliegenden Endbereich flache ringförmige Lagerabschnitte aufweisen, wobei der Innendurchmesser der ringförmigen Lagerabschnitte größer als der Außendurchmesser der Rotorachse ausgebildet ist.

Die ringförmigen Lagerabschnitte der Rotorflügel sind dabei übereinanderliegend und relativ zueinander radial verschiebbar gehaltert.

Eine besonders einfache Konstruktion besteht ferner darin, daß die ringförmigen Lagerabschnitte durch eine vorzugsweise abnehmbare obere Abdeck-und Halterungsplatte zusammengehalten werden.

Bei dieser letzteren Konstruktion können der eine oder andere Rotorflügel gekröpft ausgebildet sein, um dessen unterschiedliche Höhenlage in bezug auf die Schabebene in dem Rotorflügelverbund auszugleichen.

Alternativ können die Schabelemente jedoch auch selbst eine unterschiedliche Höhe aufweisen, derart, daß die außenliegenden Schabkanten der Schabelemente auf einer gemeinsamen Höhe zu liegen kommen.

Eine Ausführungsform der vorliegenden Erfindung umfaßt beispielsweise drei Rotorflügel und ein Plattenelement mit einem eigenen unabhängigen Rotorflügel.

Eine zweite Ausführungsform der vorliegenden Erfindung umfaßt vier Rotorflügel und ein Plattenelement mit einem eigenen Rotorflügel.

Die Zahl der jeweils ausgebildeten Rotorflügel bestimmt die Zahl der möglichen Freßplätze an einem etwa kreisförmig ausgebildeten Freßtrog, an denen ein Futternachschub gewährleistet ist.

Der Fütterungsautomat nach der vorliegenden Erfindung kann in besonders vorteilhafter Weise in eine Lücke einer Wand, die zwei Stallbereiche oder Koben voneinander trennt, eingebaut werden.

In diesem eingebauten Zustand kann der Fütterungsautomat beispielsweise auch dazu ausgenutzt werden, um Leitungen wie z.B. eine Wasserleitung sicher und variabel zu verlegen.

Im folgenden wird die Erfindung anhand von Ausführungsbeispielen unter Hinweis auf die Zeichnung näher erläutert. In der Zeichnung zeigen:
Fig. 1 eine teilweise im Schnitt gehaltene Seitenansicht eines Fütterungsautomaten mit Merkmalen nach der Erfindung;
Fig. 2 eine Draufsicht auf den Fütterungsautomaten nach Fig.1, wobei jedoch die Futterfüllung weggelassen ist, um den unteren Endbereich des Fütterungsautomaten sichtbar zu machen;
Fig. 3 eine Rotoranordnung gemäß einer ersten Ausführungsform, wie sie bei dem Fütterungsautomaten nach Fig.1 bzw. nach Fig.2 verwendet werden kann;
Fig. 4 eine alternative Ausführungsform einer Rotoranordnung, die ebenfalls bei dem Fütterungsautomaten nach Fig.1 bzw. Fig.2 verwendet werden kann; und
Fig. 5 eine Schnittdarstellung gemäß der Linie B-B in Fig.4.

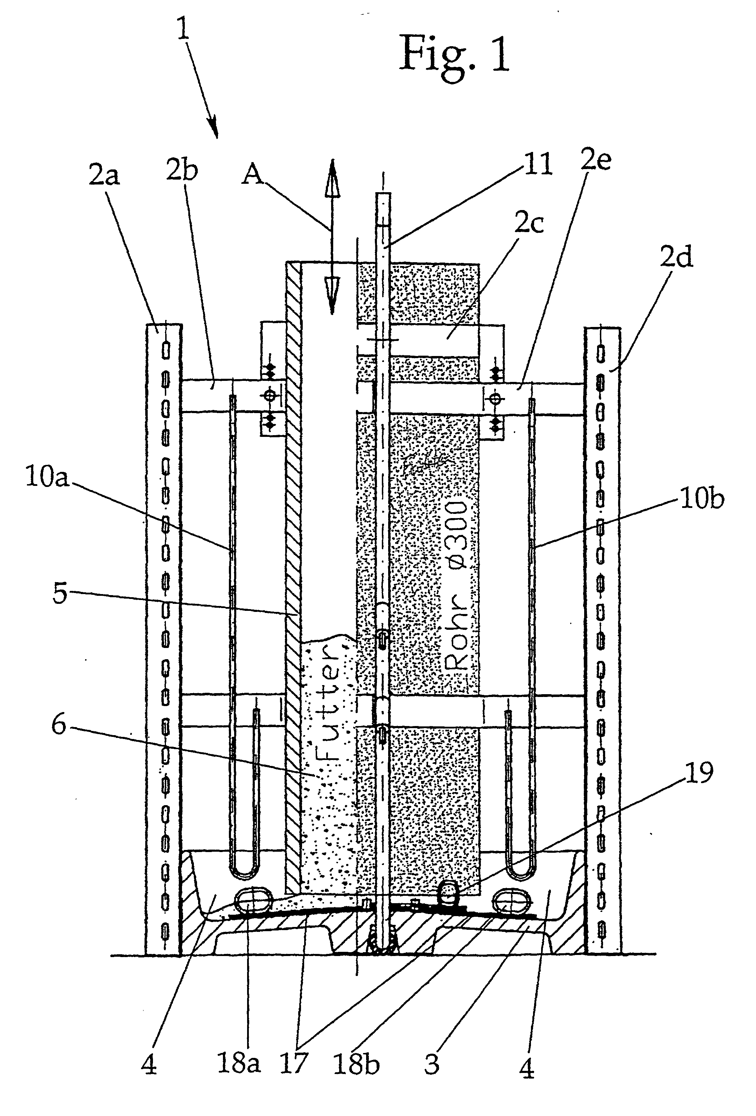

Fig. 1 zeigt eine teilweise im Schnitt gehaltene Seitenansicht eines Fütterungsautomaten, der allgemein mit 1 bezeichnet ist. Dieser Fütterungsautomat 1 enthält mehrere und verschiedene Konstruktions-und Halterungselemente 2a, 2b, 2c, 2d und 2e, die zum einen ein Halterungsgestell für einzelne voneinander getrennte Futteraufnahmebereiche bilden können und die zum anderen einen zentral angeordneten Futterzuführschacht 5 z.B in Form eines Rohres in Lage halten, das zweckmäßiger Weise in Richtung des Pfeiles A in seiner Höhe verstellbar ausgebildet ist. In dem zentralen Futterzuführschacht 5 ist Futter 6 beispielsweise in Form eines kompakten in sich zusammenhaltenden Futtermittelstranges angeordnet. Von diesem Futtermittelstrang wird an seinem unteren Ende mit Hilfe von Schabelementen, die allgemein mit 19 bezeichnet sind, Futter abgeschabt, welches dann in einen Futtertrog 3 fällt und mit Hilfe von Futterverteilerelementen 18a und 18b in einem etwa ringförmig gestalteten Trograum 4 verteilt wird.

Die einzelnen Freßabschnitte des Fütterungsautomaten können beispielsweise mit Hilfe von Trenngittern 10a, 10b voneinander getrennt sein.

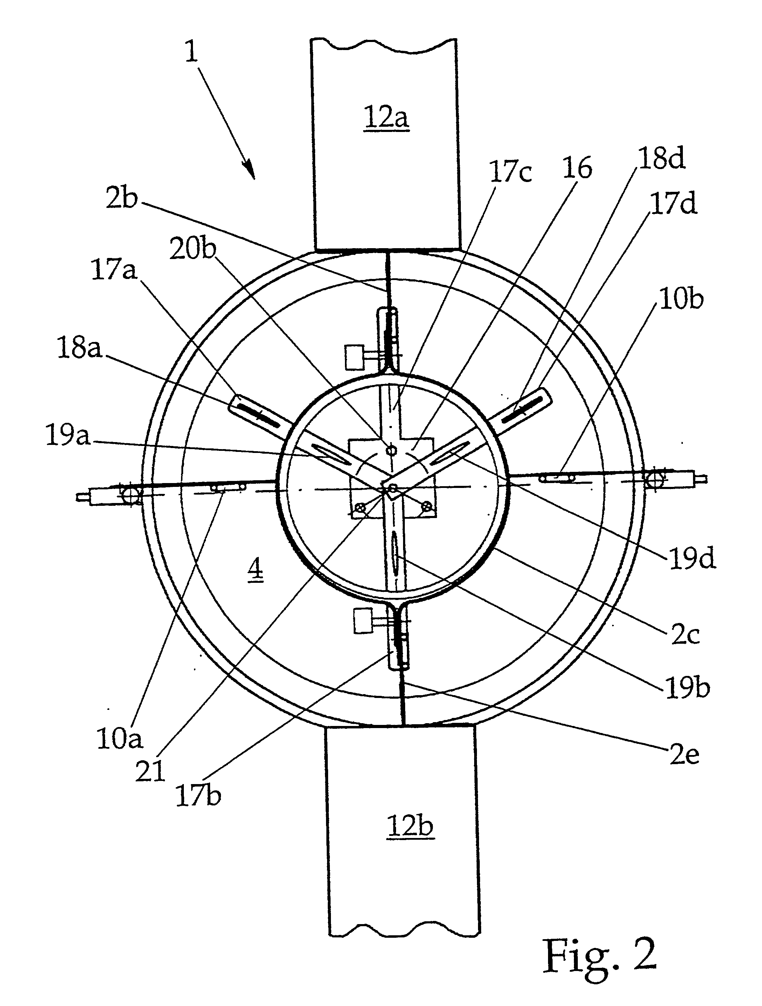

In Fig.1 ist ferner eine Wasserleitung mit 11 bezeichnet. Wenn der Fütterungsautomat gemäß Fig.1 in eine Lücke einer Trennwand eingebaut wird, also in eine Lücke, die in Fig. 2 von Wandabschnitten 12a und 12b begrenzt wird, kann der Fütterungsautomat auch dazu verwendet werden, um verschiedene Leitungen wie beispielsweise die Wasserleitung 11 zu verlegen, die dadurch von außen weitgehend unsichtbar bleibt, jedoch durch Demontage des Fütterungsautomaten jederzeit zugänglich ist, um sie an einer anderen Stelle zu verlegen.

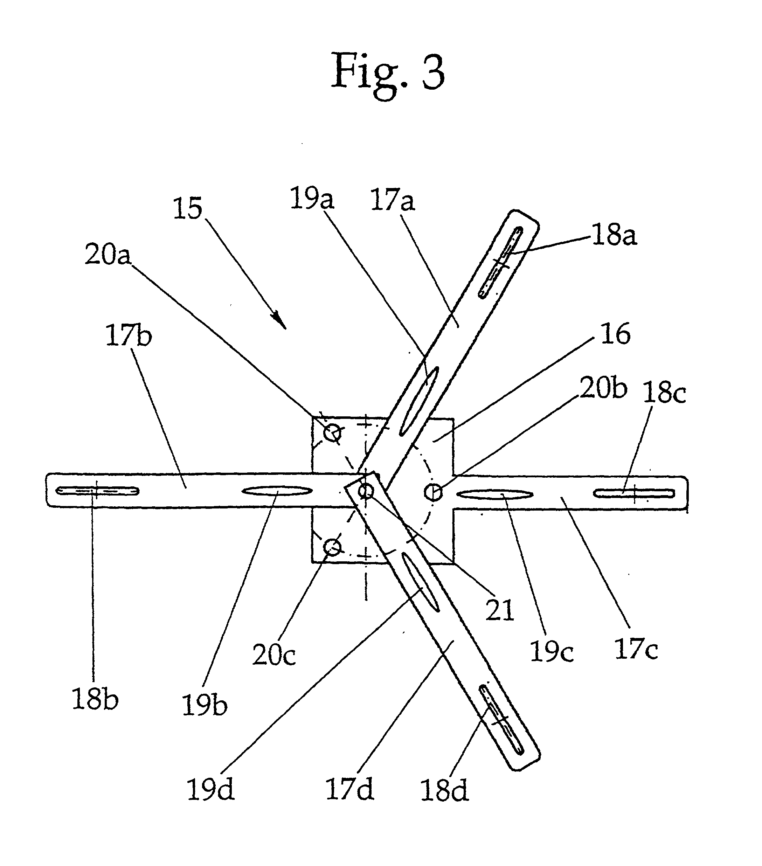

Fig. 2 zeigt eine Draufsicht auf den Fütterungsautomaten 1, wobei bei dieser Darstellung die Futterfüllung gemäß der Futtermasse 6 in Fig.1 weggelassen ist, um auf den Boden des Fütterungsautomaten blicken zu können. Auf dem Boden des Fütterungsautomaten befindet sich der bereits erwähnte Fütterungstrog 3, der nach Art einer kreisförmigen Schale mit einem ringförmigen Trograum 4 gestaltet ist. In einem zentralen Abschnitt des Fütterungstroges ist eine Rotorachse 21 gelagert, von der aus mehrere Rotorflügel 17a, 17b und 17d ausgehen, die an ihren außenliegenden Endbereichen mit
Futterverteilerelementen 18a, 18d und an ihren radial weiter innenliegenden Bereichen mit Schabelementen 19a, 19d und 19b ausgestattet sind. Jeder der Rotorflügel 17a, 17b und 17d ist jeweils unabhängig von den anderen Rotorflügeln um die zentrale Rotorachse 21 drehbar, wobei die Drehbewegung durch Anschlagelemente 20a, 20b und 20c (s.Fig.3) begrenzt wird. Diese Anschlagelemente 20a, 20b und 20c können aus Stiften bestehen, die senkrecht von einer Platte 16 abstehen.

Da die Rotoranordnung 15 bei Betätigen eines der Rotorflügel 17a, 17b, 17c, 17d nicht als Ganzes mitgedreht wird, ist der Widerstand, den ein Zuchttier zum Abschaben von Futter an seiner Futterstelle überwinden muß, vergleichsweise gering.

Da die in Fig.3 gezeigten drei Rotorflügel 17a, 17b und 17d nur um einen begrenzten Winkelbereich schwenkbar sind, würden sich bei starr angeordneter Platte 16 tote Winkelbereiche ergeben, von denen einerseits kein Futter von dem von oben zugeführten Futterstrang abgeschabt werden kann und in die auch kein Futter gefördert wird, wenn einer der drei Rotorflügel betätigt wird.

Um derartige tote Winkelbereiche zu vermeiden, ist die Platte 16 selbst um die Rotorachse 21 drehbar gelagert und ist in vorteilhafter Weise mit einem eigenen Rotorflügel 17c ausgestattet, der ebenfalls ein Schabelement 19c und auch ein Futterverteilerelement 18c aufweist.

In Fig.3 sind die jeweiligen Anschlagelemente mit 20a, 20b und 20c bezeichnet.

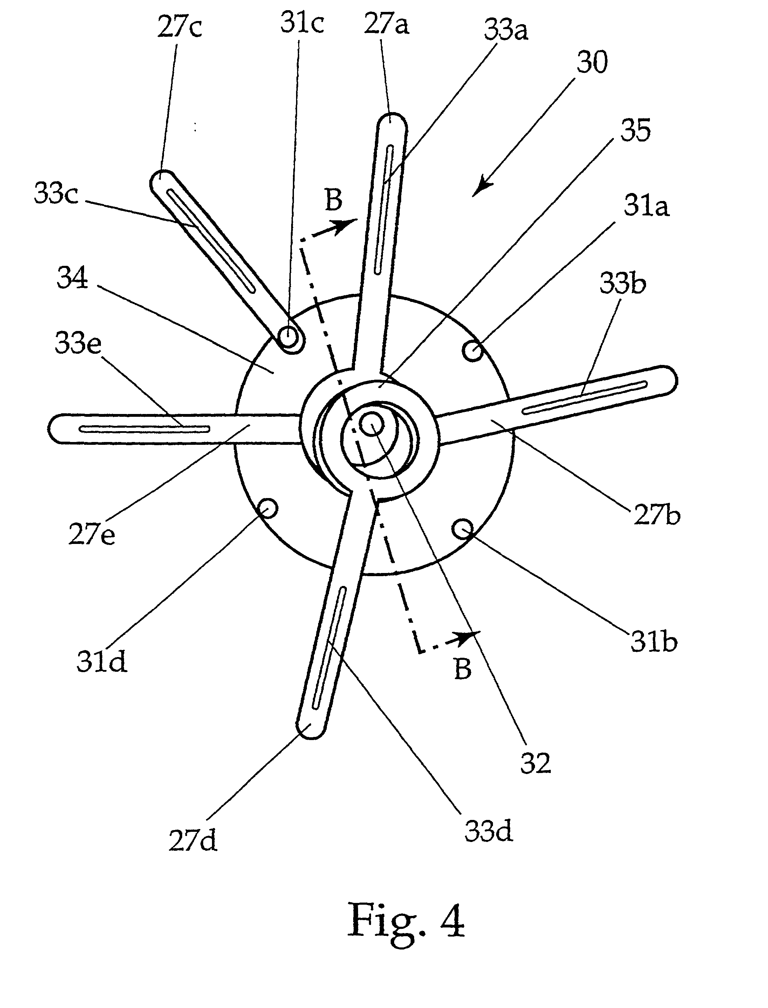

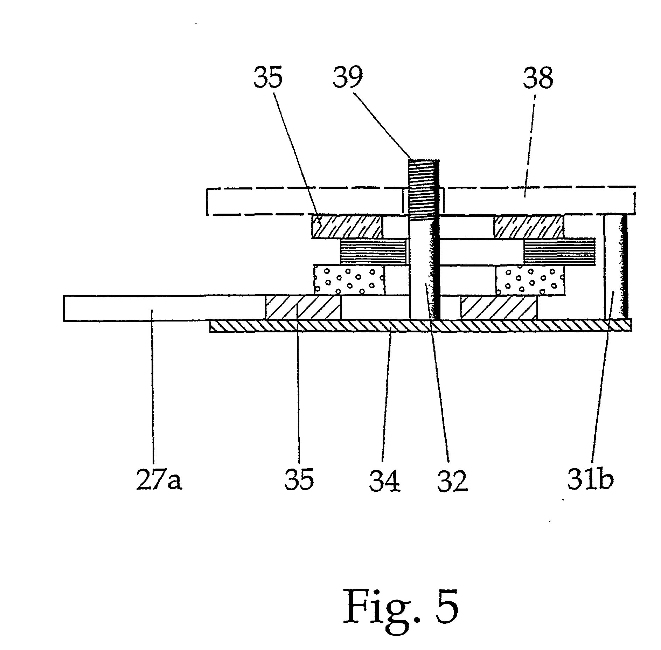

Fig.4 zeigt eine alternative Ausführungsform einer Rotoranordnung, die allgemein mit 30 bezeichnet ist. Diese Rotoranordnung 30 kann ebenfalls bei dem Fütterungsautomaten, wie er in Fig.1 und in Fig.2 dargestellt ist, verwendet werden. Die Rotoranordnung 30 umfaßt eine Grundplatte 34, die bei dem gezeigten Ausführungsbeispiel nicht viereckig wie im Falle von Fig.3, sondern als kreisrunde Platte ausgebildet ist. Auf dieser Platte 34 sind Anschlagelemente 31a, 31b, 31c und 31d ausgebildet, wobei eines dieser Anschlagelemente in Fig.5 in Seitenansicht zu sehen ist (gemäß dem Bezugszeichen 31b).

Die Anschlagelemente können aus Anschlagstäben bestehen, können aber auch aus Vorsprüngen bestehen, die aus der kreisförmigen Platte 34 ausgestanzt oder ausgeformt sind. Die Platte 34 ist um eine zentrale Rotorachse 32 drehbar gelagert, wobei die Rotorachse 32 an ihrem oberen Ende mit einem Gewindeabschnitt 39 ausgestattet sein kann, der in Fig.5 dargestellt ist.

Fig. 5, die eine Schnittansicht gemäß der Linie B-B in Fig.4 zeigt, enthält ein zusätzliches Element in Form einer Halterungsplatte 38, die auf den Verbund der Rotorflügel 27a, 27b, 27c, 27d und 27e aufgesetzt ist, also in Fig.4 nicht dargestellt ist. Die Halterungsplatte 38 kann beispielsweise mit Hilfe einer Mutter (nicht gezeigt) an der zentralen Rotorachse 32 befestigt werden, wobei die Anschlagelemente 31a, 31b, 31c und 31d als Abstandhalter dienen können.

Wie besonders gut aus Fig.4 zu erkennen ist, sind bei dieser Ausführungsform der Rotoranordnung die Rotorflügel 27a, 27b, 27d und 27e mit ringförmigen Lagerabschnitten 35 ausgestattet, die um die zentrale Rotorachse 32 herum gelegt sind. Durch diese Ausbildung mit den ringförmigen Lagerabschnitten 35 können die Rotorflügel 27a, 27b, 27d und 27e in einem begrenzten Ausmaß (entsprechend dem Innendurchmesser der Lagerabschnitte) in radialer Richtung relativ zueinander verschoben werden. Dies hat den Vorteil, daß die bei dieser Ausführungsform kombinierte Anordnung aus Schab-und Verteilerelementen 33a, 33b, 33d und 33e auch ihre radiale Position verändern können und daher unterschiedliche Schabbereiche am unteren Ende der Futtermasse erreicht werden können.

Bei der in Fig.4 und Fig.5 gezeigten Ausführungsform einer Rotoranordnung ist die Platte 34 selbst ebenfalls mit einem eigenen Rotorflügel 27c und einem kombinierten Schab-und Verteilerelement 33c ausgestattet. Auch bei dieser Ausführungsform wird somit in wirksamer Weise verhindert, daß tote Winkelbereiche gemäß den Schwenkbewegungen der Rotorflügel entstehen, da die Platte 34 zusammen mit ihrem Rotorflügel 27c ebenfalls um die zentrale Rotorachse 32 drehbar gelagert sein kann.

Es ist offensichtlich, daß die Zahl der Freßstellen im Umfangsbereich des Futtertroges durch die Zahl der Rotorflügel eingestellt werden kann.

Die vorliegende Erfindung ist ferner nicht auf die dargestellten Ausführungsformen beschränkt. Es sind vielmehr eine Reihe von Abänderungen und Abwandlungen möglich, ohne jedoch dadurch den Rahmen der vorliegenden Erfindung zu verlassen.

So ist es beispielsweise möglich, einige der Rotorflügel gekröpft auszubilden, um ihre unterschiedliche Höhenlage in dem Verbund, wie er in Fig.5 gut zu erkennen ist, in bezug auf die Schabebene auszugleichen.

Eine alternative Ausführungsform besteht ferner darin, die Schab-und Verteilerelemente entsprechend der unterschiedlichen Höhenlage der Rotorflügel in dem Verbund unterschiedlich zu gestalten, so daß die jeweiligen Schabkanten aller Schabelemente auf einer gemeinsamen Höhe zu liegen kommen.

Der Fütterungsautomat nach der vorliegenden Erfindung ist ferner für sehr verschiedene Futtermassen verwendbar, die von einem kompakten bröseligen Futtermassestrang bis hin zu einem hoch viskosen sehr zähen Futtermassenstrang reichen.

### Bezugszeichenliste

- 1: Fütterungsautomat
- 2a: Konstruktions-und Halterungselement
- 2b: Konstruktions-und Halterungselement
- 2c: Konstruktions-und Halterungselement
- 2d: Konstruktions-und Halterungselement
- 2e: Konstruktions-und Halterungselement
- 3: Futtertrog
- 4: ringförmiger Trograum
- 5: Futterzufuhrschacht
- 6: Futtermasse
- 10a: Trenngitter
- 10b: Trenngitter
- 11: Wasserleitung
- 12a: Wandabschnitt
- 12b: Wandabschnitt
- 15: Rotoranordnung
- 16: Platte
- 17: Rotorflügel
- 17a: Rotorflügel
- 17b: Rotorflügel
- 17c: Rotorflügel
- 17d: Rotorflügel
- 18: Futterverteilerelement
- 18a: Futterverteilerelement
- 18b: Futterverteilerelement
- 18c: Futterverteilerelement
- 18d: Futterverteilerelement
- 19: Schabelement
- 19a: Schabelement
- 19b: Schabelement
- 19c: Schabelement
- 19d: Schabelement
- 20a: Anschlagelement
- 20b: Anschlagelement
- 20c: Anschlagelement
- 21: Rotorachse
- 27a: Rotorflügel
- 27b: Rotorflügel
- 27c: Rotorflügel
- 27d: Rotorflügel
- 27e: Rotorflügel
- 30: Rotoranordnung
- 31a: Anschlagelement
- 31b: Anschlagelement
- 31c: Anschlagelement
- 31d: Anschlagelement
- 32: Rotorachse
- 33a: Schab-und Verteilerelement
- 33b: Schab-und Verteilerelement
- 33c: Schab-und Verteilerelement
- 33d: Schab-und Verteilerelement
- 33e: Schab-und Verteilerelement
- 34: Platte
- 35: ringförmige Lagerabschnitte
- 38: Halterungsplatte
- 39: Gewinde
- A: Pfeil
- B-B: Schnittlinie

## Patentansprüche

1. Fütterungsautomat (1) zum Füttern von Zuchttieren, insbesondere von Schweinen, mit einem vorzugsweise kreisrunden Futtertrog (3), in den in vertikaler Richtung über wenigstens einen Futterzuführschacht (5) eine Futtermasse (6) zuführbar ist, mit einem über dem Fütterungstrog (3) angeordneten Futterabgaberotor (15,16, 17, 18, 19, 21), der mehrere Rotorflügel (17a-17d) aufweist, die mit Schabelementen (19a-19d) ausgestattet sind, wobei die Rotorflügel (17a-17d) unabhängig voneinander um eine zentrale Rotorachse (21) über einen begrenzten Winkelbereich durch ein jeweiliges Zuchttier schwenkbar sind, um bei jeder Schwenkbewegung vom unteren Endbereich der Futtermasse kleinere in den Futtertrog (3,4) gelangende Futtermengen abzuschaben.

2. Fütterungsautomat nach Anspruch 1,
**dadurch gekennzeichnet, daß** die Rotorflügel (17a-17d) an der Rotorachse (21) drehbar gelagert sind und durch Anschlagelemente (20a-20c) in ihrer jeweiligen Schwenkbewegung begrenzt sind.

3. Fütterungsautomat nach Anspruch 2,
**dadurch gekennzeichnet, daß** die Anschlagelemente (20a-20c) auf einer gemeinsamen, vorzugsweise ebenfalls um die Rotorachse (21) drehbar gelagerten Platte (16) angeordnet sind.

4. Fütterungsautomat nach Anspruch 3,
**dadurch gekennzeichnet, daß** die Platte (16) mit einem eigenen von einem Zuchttier betätigbaren Rotorflügel (17c) ausgestattet ist.

5. Fütterungsautomat nach einem der vorhergehenden Ansprüche,
**dadurch gekennzeichnet, daß** jeder Rotorflügel (17a-17d) ein eigenes Schabelement (19a-19d) und ein radial außerhalb des Schabelementes angeordnetes Futterverteilerelement (18a-18d) aufweist.

6. Fütterungsautomat nach einem der Ansprüche 1 bis 5,
**dadurch gekennzeichnet, daß** allen Rotorflügeln (17a-17d) ein gemeinsamer in seiner Höhe verstellbarer Futterzuführschacht (5) zugeordnet ist.

7. Fütterungsautomat nach einem vorhergehenden Ansprüche,
**dadurch gekennzeichnet, daß** die Futtermasse (5) aus einem klebrigen Futter wie einem Corn-copp-Mix besteht.

8. Fütterungsautomat nach Anspruch 7,
**dadurch gekennzeichnet, daß** jeder Futtermassestrang eine bröselige Konsistenz hat.

9. Fütterungsautomat nach einem der vorhergehenden Ansprüche,
**dadurch gekennzeichnet, daß** die Rotorflügel (27a, 27b, 27d, 27e) in bezug auf die Rotorachse (32) in radialer Richtung um eine begrenzte Strecke verschiebbar gelagert sind.

10. Fütterungsautomat nach Anspruch 9,
**dadurch gekennzeichnet, daß** die Rotorflügel (27a, 27b, 27d, 27e) an ihrem radial innenliegenden Endbereich flache ringförmige Lagerabschnitte (35) aufweisen, wobei der Innendurchmesser der ringförmigen Lagerabschnitte (35) größer als der Außendurchmesser der Rotorachse (32) ausgebildet ist.

11. Fütterungsautomat nach Anspruch 9 oder 10,
**dadurch gekennzeichnet, daß** die ringförmigen Lagerabschnitte (35) der Rotorflügel (27a, 27b, 27d, 27e) übereinanderliegend und relativ zueinander radial verschiebbar gehaltert sind.

12. Fütterungsautomat nach Anspruch 11,
**dadurch gekennzeichnet, daß** die ringförmigen Lagerabschnitte (35) durch eine vorzugsweise abnehmbare obere Abdeck-und Halterungsplatte (38) in einem Verbund zusammengehalten sind.

13. Fütterungsautomat nach Anspruch 11 oder 12,
**dadurch gekennzeichnet, daß** ein oder mehrere Rotorflügel gekröpft ausgebildet sind, um ihre unterschiedliche Höhenlage in dem Rotorflügelverbund (Fig.5) auszugleichen.

14. Fütterungsautomat nach Anspruch 10, 11 oder 12,
**dadurch gekennzeichnet, daß** die Schabelemente (33a-33e) der Rotorflügel (27a-27e) eine unterschiedliche Höhe aufweisen, derart, daß die außenliegenden Schabkanten der Schabelemente (33a-33e) auf einer gemeinsamen Höhe liegen.

15. Fütterungsautomat nach einem der vorhergehenden Ansprüche
**dadurch gekennzeichnet, daß** der Fütterungsautomat (1) drei Rotorflügel (17a, 17b, 17d) und ein Plattenelement (16) mit einem eigenen Rotorflügel (17c) aufweist.

16. Fütterungsautomat nach einem der Ansprüche 1 bis 14,
**dadurch gekennzeichnet, daß** der Fütterungsautomat (1) vier Rotorflügel (27a, 27b, 27d, 27e) und ein
Plattenelement (34) mit einem eigenen Rotorflügel (27c) aufweist.

17. Fütterungsautomat nach Anspruch 1,
**dadurch gekennzeichnet, daß** der Fütterungsautomat (1) in eine Lücke einer Wand (12a, 12b), die zwei Stallbereiche bzw. Koben voneinander trennt, eingesetzt ist.

18. Fütterungsautomat nach einem der vorhergehenden Ansprüche,
**dadurch gekennzeichnet, daß** in dem Fütterungsautomat (1) Leitungen, insbesondere eine Wasserleitung (11) verlegt sind.

## Claims

1. Automatic feeding device (1) for feeding breeding animals, in particular pigs, comprising a preferably circular feeding trough (3), into which a feed compound (6) is feedable in vertical direction via at least one feed supply hopper (5), comprising a feed delivery rotor (15, 16, 17, 18, 19, 21), which is disposed above the feeding trough (3) and has a plurality of rotor blades (17a - 17d), which are equipped with scraping elements (19a - 19d), wherein the rotor blades (17a - 17d) may be swivelled independently of one another through a limited angular range about a central rotor axle (21) by a respective breeding animal in order during each swivelling motion to scrape off from the bottom end region of the feed compound smaller feed quantities, which pass into the feeding trough (3, 4).

2. Automatic feeding device according to claim 1,
**characterized in that** the rotor blades (17a - 17d) are mounted rotatably on the rotor axle (21) and limited in their respective swivelling motion by stop elements (20a - 20c).

3. Automatic feeding device according to claim 2,
**characterized in that** the stop elements (20a - 20c) are disposed on a common plate (16), which is preferably mounted so as to be likewise rotatable about the rotor axle (21).

4. Automatic feeding device according to claim 3,
**characterized in that** the plate (16) is equipped with a separate rotor blade (17c), which is actuable by a breeding animal.

5. Automatic feeding device according to one of the preceding claims,
**characterized in that** each rotor blade (17a - 17d) has a separate scraping element (19a - 19d) and a feed distributing element (18a - 18d), which is disposed radially outside of the scraping element.

6. Automatic feeding device according to one of claims 1 to 5,
**characterized in that** associated with all of the rotor blades (17a - 17d) is a common, height-adjustable feed supply hopper (5).

7. Automatic feeding device according to one of the preceding claims,
**characterized in that** the feed compound (5) comprises a tacky feed such as a corn-copp mix.

8. Automatic feeding device according to claim 7,
**characterized in that** each feed compound strand is of a crumbly consistency.

9. Automatic feeding device according to one of the preceding claims,
**characterized in that** the rotor blades (27a, 27b, 27d, 27e) are mounted so as to be displaceable to a limited extent in radial direction relative to the rotor axle (32).

10. Automatic feeding device according to claim 9,
**characterized in that** the rotor blades (27a, 27b, 27d, 27e) at their radially inner end region have flat annular bearing portions (35), wherein the inside diameter of the annular bearing portions (35) is larger than the outside diameter of the rotor axle (32).

11. Automatic feeding device according to claim 9 or 10,
**characterized in that** the annular bearing portions (35) of the rotor blades (27a, 27b, 27d, 27e) are supported in a superimposed manner and so as to be displaceable radially relative to one another.

12. Automatic feeding device according to claim 11,
**characterized in that** the annular bearing portions (35) are held together in a group by means of a preferably removable top cover- and mounting plate (38).

13. Automatic feeding device according to claim 11 or 12,
**characterized in that** one or more rotor blades are offset in order to compensate their different height position in the rotor blade group (Fig. 5).

14. Automatic feeding device according to claim 10, 11 or 12,
**characterized in that** the scraping elements (33a - 33e) of the rotor blades (27a - 27e) are of differing height such that the outer-lying scraping edges of the scraping elements (33a - 33e) lie at a common height.

15. Automatic feeding device according to one of the preceding claims,
**characterized in that** the automatic feeding device (1) comprises three rotor blades (17a, 17b, 17d) and a plate element (16) with a separate rotor blade (17c).

16. Automatic feeding device according to one of claims 1 to 14,
**characterized in that** the automatic feeding device (1) comprises four rotor blades (27a, 27b, 27d, 27e) and a plate element (34) with a separate rotor blade (27c).

17. Automatic feeding device according to claim 1,
**characterized in that** the automatic feeding device (1) is inserted into a gap in a wall (12a, 12b), which separates two pigsty regions and/or sheds from one another.

18. Automatic feeding device according to one of the preceding claims,
**characterized in that** pipes, in particular a water pipe (11), are installed in the automatic feeding device (1).

## Revendications

1. Automate d'alimentation (1) pour l'alimentation d'animaux d'élevage, en particulier de porcs, comportant une auge pour aliment (3) de préférence circulaire, dans laquelle une masse d'aliment (6) peut être amenée en direction verticale par au moins un conduit d'amenée d'aliment (5), présentant un rotor (15, 16, 17, 18, 19, 21) délivrant l'aliment disposé au-dessus de l'auge pour aliment (3), lequel présente plusieurs pales de rotor (17a-17d), qui sont équipées d'éléments racleurs (19a-19d), les pales de rotors (17a-17d) pouvant être pivotées par un animal d'élevage, indépendamment les unes des autres autour d'un axe de rotor central (21) sur une zone angulaire limitée, afin de racler à chaque mouvement de pivotement, depuis la zone d'extrémité inférieure de la masse d'aliment des quantités d'aliment plus petites parvenant dans l'auge d'aliment (3, 4).

2. Automate d'alimentation selon la revendication 1,
**caractérisé en ce que** les pales de rotor (17a-17d) sont supportées rotatives sur l'axe de rotor (21) et sont limitées dans leur mouvement de pivotement respectif par des éléments de butée (20a-20c).

3. Automate d'alimentation selon la revendication 2,
**caractérisé en ce que** les éléments de butée (20a-20c) sont disposés sur une plaque (16) commune supportée en rotation, de préférence également autour de l'axe de rotor (21).

4. Automate d'alimentation selon la revendication 3,
**caractérisé en ce que** la plaque (16) est équipée de sa propre pale de rotor (17c), pouvant être actionnée par un animal d'élevage.

5. Automate d'alimentation selon l'une des revendications précédentes,
**caractérisé en ce que** chaque pale de rotor (17a-17d) présente son propre élément racleur (19a-19d) et un élément répartiteur d'aliment (18a-18d) disposé radialement à l'extérieur de l'élément racleur.

6. Automate d'alimentation selon l'une des revendications 1 à 5,
**caractérisé en ce qu'**à toutes les pales de rotor (17a-17d) est associé un conduit d'amenée d'aliment (5)commun réglable en hauteur.

7. Automate d'alimentation selon l'une des revendications précédentes,
**caractérisé en ce que** la masse d'aliment (5) est constituée d'un aliment collant comme un mélange "corn-copp".

8. Automate d'alimentation selon la revendication 7,
**caractérisé en ce que** chaque cordon de masse d'aliment a une consistance grumeleuse.

9. Automate d'alimentation selon l'une des revendications précédentes,
**caractérisé en ce que** les pales de rotor (27a, 27b, 27d, 27e), sont supportées en translation dans la direction radiale par rapport à l'axe de rotor (32) autour d'une trajectoire limitée.

10. Automate d'alimentation selon la revendication 9,
**caractérisé en ce que** les pales de rotor (27a, 27b, 27d, 27e) à leur zone d'extrémité radiale intérieure présentent des sections de palier (35) annulaires, le diamètre intérieur des sections de palier (35) annulaires étant réalisé supérieur au diamètre extérieur de l'axe de rotor (32).

11. Automate d'alimentation selon la revendication 9 ou 10,
**caractérisé en ce que** les sections de palier (35) annulaires des pales de rotor (27a, 27b, 27d, 27e) sont maintenues superposées les unes aux autres et capables de translation radiale les unes par rapport aux autres.

12. Automate d'alimentation selon la revendication 11,
**caractérisé en ce que** les sections de palier (35) annulaires, sont maintenues ensemble en une association, par une plaque de couverture et de maintien (38) supérieure, de préférence démontable.

13. Automate d'alimentation selon la revendication 11 ou 12,
**caractérisé en ce qu'**une ou plusieurs pales sont réalisées coudées, pour compenser leurs différentes positions en hauteur dans l'ensemble de pales de rotor (Fig. 5).

14. Automate d'alimentation selon la revendication 10, 11 ou 12,
**caractérisé en ce que** les éléments racleurs (33a-33e) des pales de rotor (27a-27e) présentent une hauteur différente telle que les arêtes de raclage des éléments racleurs (33a-33e) se situent à une hauteur commune.

15. Automate d'alimentation selon l'une des revendications précédentes,
**caractérisé en ce que** l'automate d'alimentation (1) présente trois pales de rotor (17a, 17b, 17d) et un élément formant plaque (16) présentant sa propre pale de rotor (27c).

16. Automate d'alimentation selon l'une des revendications 1 à 14,
**caractérisé en ce que** l'automate d'alimentation (1) présente quatre pales de rotor (27a, 27b, 27d, 27e) et un élément formant plaque (34) présentant sa propre pale de rotor (27c).

17. Automate d'alimentation selon la revendication 1,
**caractérisé en ce que** l'automate d'alimentation (1) est inséré dans une ouverture d'un mur (12a, 12b), qui sépare l'une de l'autre deux zones d'étable ou de porcherie.

18. Automate d'alimentation selon l'une des revendications précédentes,
**caractérisé en ce que** dans l'automate d'alimentation (1) sont posées des conduites, en particulier une conduite d'eau (11).
